# EUROPÄISCHE PATENTSCHRIFT

(11) **EP 0 706 280 B1**
(45) Veröffentlichungstag und Bekanntmachung des Hinweises auf die Patenterteilung: **03.05.2000**
(21) Anmeldenummer: 95113215.8
(22) Anmeldetag: 23.08.1995
(51) Int. Cl.: H04N 1/00

(54) **Stimulierbare Phosphorfolie und Verfahren zum Testen einer digitalen Abtast-Vorrichtung für stimulierbare Phosphorfolien**
Stimulable phosphor sheet and method for testing a digital scanning device for stimulable phosphor sheets
Feuille de phosphore stimulable et procédé pour tester un dispositif de balayage numérique pour des feuilles de phosphore stimulables

(30) Priorität: 19.09.1994 DE 4433344
(43) Veröffentlichungstag der Anmeldung: 10.04.1996
(73) Patentinhaber: Agfa-Gevaert AG, 51373 Leverkusen (DE)
(72) Erfinder: Grillet, Luc, D-81547 München (DE)

(56) Entgegenhaltungen:
- US-A- 4 864 500
- US-A- 5 276 726
- PATENT ABSTRACTS OF JAPAN vol. 004, no. 180 (P-040), 12.Dezember 1980 & JP-A-55 124037 (TOSHIBA CORP), 24.September 1980,
- PATENT ABSTRACTS OF JAPAN vol. 010, no. 111 (P-451), 25.April 1986 & JP-A-60 243677 (CANON KK), 3.Dezember 1985,

## Beschreibung

Die Erfindung betrifft eine stimulierbare Phosphorfolie und ein Verfahren zum Testen verschiedener Systemparameter einer digitalen Abtastvorrichtung für stimulierbare Phosphorfolien nach dem Oberbegriff des Anspruchs 1.

In der medizinischen Röntgendiagnostik wird zunehmend von digitalen Diagnoseeinrichtungen Gebrauch gemacht. Dabei werden statt der konventionellen Röntgenblattfilme immer häufiger stimulierbare Phosphorfolien eingesetzt. Diese haben gegenüber konventionellen Röntgenfilmen den Vorteil einer nahezu linearen Wiedergabecharakteristik. Stimulierbare Phosphorfolien sind deshalb weitaus unempfindlicher gegenüber zu geringen bzw. zu hohen Dosisleistungen. Ein weiterer Vorteil stimulierbarer Phosphorfolien ist, daß sie wiederverwendbar sind. Sie können nämlich nach einer Röntgenaufnahme gelöscht und für weitere Röntgenaufnahmen verwendet werden. Vorteilhaft bei der Verwendung von Phosphor folien ist weiter, daß sie hinsichtlich ihrer mechanischen Handhabung weitgehend mit konventionellen Röntgenblattfilmen kompatibel sind. Dies bedeutet, daß bereits vorhandene Be- bzw. Entladegeräte für Röntgenblattfilm-Einrichtungen (z. B Röntgenblattfilm-Kassetten) weitgehend auch für Phosphorfolien verwendbar sind. Ein Verfahren zur Handhabung von Röntgenkassetten mit einer phosphorbeschichteten Folie ist z. B. aus der DE-A-37 31 203 bekannt. Eine Röntgenkassette wird dort zunächst mit der Phosphorfolie beladen. Anschließend werden in einer Identifikationsstation aufnahmerelevante Daten, wie Patientenname, Geburtsdatum, behandelnder Arzt etc. in einen an der Kassette befindlichen Halbleiterspeicher geschrieben. Danach wird die Röntgenaufnahme erstellt. Zum Erfassen der Röntgenbildaufnahme wird die Kassette in ein digitales Lesegerät eingeschoben. Dort wird die Kassette geöffnet, die Phosphorfolie entnommen und mit einer digitalen Abtastvorrichtung stimuliert. Das dabei von der Phosphorfolie ausgesandte Licht wird von einer Licht-Sammeleinrichtung aufgenommen und in digitale Signale umgewandelt. Diese Signale können dann in einer digitalen Bildverarbeitungseinrichtung weiterverarbeitet werden.

Ein Verfahren zur Prüfung der Qualität eines Röntgen-Filmprozessors ist aus US - A - 5 276 726 bekannt. Ein klassischer, auf Röntgen-Strahlen empfindlicher Film mit entsprechender chemischer Emulsion wird verwendet; ein Prüfmuster wird in eine gegen Röntgen-Strahlungen geschützte Region des Filmes gedruckt und später in Vergleich zu einem originalen Muster analysiert. Zusätzlich wird im normalen Röntgen-Beleuchtungsverfahren eine fluoreszierende Strahlensvertärkungsfolie in Verbindung mit dem Film verwendet.

Die vorliegende Erfindung bezieht sich auf den abtastenden Teil der eingangs genannten Verfahren. Beim Abtasten kommt es darauf an, die in der Phosphorfolie latent enthaltene Bildinformation punktgenau abzutasten und in digitale Bildsignale umzuwandeln. Beim punktweisen Stimulieren der Phosphorfolie wird in der Regel ein Laserstrahl über die Phosphorfolie abgelenkt. Dabei können mechanische Unregelmäßigkeiten zu Fehlern beim Abtasten führen. Es ist daher von Zeit zu Zeit nötig, die Abtasteinheit zu überprüfen. Dazu werden bisher Blei-Phantome verwendet, mit denen ein Phantombild durch eine Röntgenkassette hindurch auf einer stimulierbaren Phosphorfolie erzeugt wird. Dieses Phantombild wird anschließend in der Abtasteinheit ausgelesen und ausgewertet.

Nachteilig bei diesem Prüfverfahren ist, daß das Testergebnis nicht nur von der Digitalisierungseinheit abhängt sondern auch von anderen Parametern, die nicht eindeutig identifizierbar bzw. quantifizierbar sind, beispielsweise die Aufnahmequalität bei der Aufnahme des Phantombilds, Qualität und Lage der Phosphorfolie in der Kassette, Qualität und Lage des Blei-Phantoms relativ zur Kassette.

Es ist daher Aufgabe der Erfindung, ein möglichst einfaches Verfahren und möglichst einfache Mittel zum Testen verschiedener Systemparameter einer digitalen Abtastvorrichtung für stimulierbare Phosphorfolien anzugeben, mit denen zuverlässige Testergebnisse erzielt werden.

Diese Aufgabe wird gelöst durch das im Anspruch 1 beschriebene Verfahren und die in Anspruch 4 beschriebene Phosphorfolie.

Vorteilhafte Ausführungsformen der Erfindung ergeben sich aus den Unteransprüchen.

Nachfolgend wird die Erfindung anhand eines Ausführungsbeispiels und mehrerer Figuren näher erläutert. Es zeigen:
- Fig. 1: eine stimulierbare Phosphorfolie,
- Fig. 2: eine Diagnoseeinrichtung für stimulierbare Phosphorfolien,
- Fig. 3: ein Prüfmuster und
- Fig. 4: einen Ausschnitt aus Fig. 3.

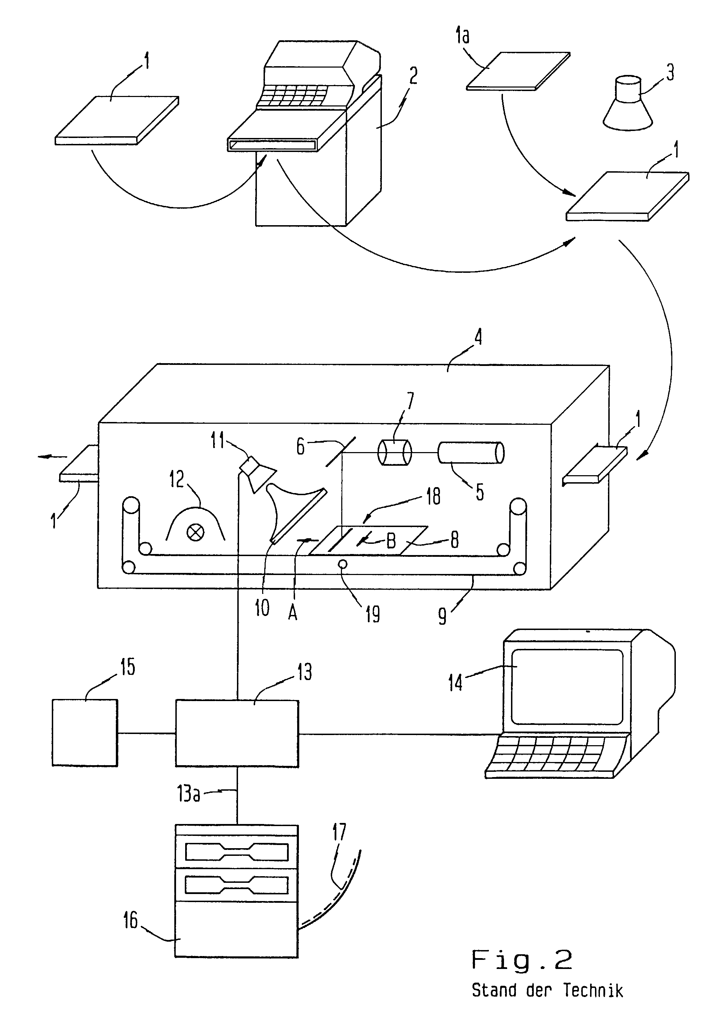

In Fig. 2 sind die für ein digitales Radiografieverfahren verwendeten, eingangs bereits erwähnten Einrichtungen dargestellt. Eine Röntgenkassette 1 ist mit einer stimulierbaren Phosphorfolie beladen. Sie wird in eine Identifikationsstation 2 eingeführt, in der aufnahmerelevante Daten in einen in der Kassette befindlichen Halbleiterspeicher geschrieben werden. Über eine Eingabekonsole sind verschiedene Daten, wie Patientenname, Aufnahmebereich, behandelnder Arzt etc., eingebbar. Dabei kann vorgesehen werden, eine digitale Patientendatenkarte zu lesen und die Daten direkt an den Halbleiterspeicher der Kassette zu übertragen. Außerdem können aus bestimmten Auswahl-Menüs gewünschte Auswerteparameter für die Phosphorfolie festgelegt werden. Nach der Identifizierung der Kassette wird die Röntgenaufnahme unter einer Röntgenröhre 3 erstellt. Die Phosphorfolie trägt das Röntgenbild als latentes Bild. Zum Auslesen dieses latenten Bildes wird die Röntgenkassette 1 in eine digitale Abtastvorrichtung 4 eingegeben. Dort öffnet eine nicht näher gezeigte mechanische Einrichtung die Röntgenkassette 1 und entnimmt die Phosphorfolie 8. Über eine Transporteinrichtung 9 wird die Phosphorfolie dann einer Lesestation 18 zugeführt. Die Lesestation 18 umfaßt einen Laser 5, einen beweglichen Spiegel 6, ein Objektiv 7, einen Lichtleiter 10 sowie einen Fotomultiplier 11. Der Laser 5 sendet Licht aus, mit dem die stimulierbare Phosphorfolie anregbar ist. Die Wellenlänge kann im infraroten, roten oder grünen Wellenlängenbereich liegen, je nachdem, welcher Phosphorfolientyp vorliegt. Das Licht wird über das Objektiv 7 auf die Phosphorfolie 8 fokussiert. Der bewegliche Spiegel 6 (Schwingspiegel oder rotierender Polygonspiegel) richten die Laserstrahlung punkt- und zeilenweise auf die Phosphorfolie 8. In den Bereichen, in denen das latente Röntgenbild auf der Folie ist, wird Stimulationslicht von der Phosphorfolie 8 ausgesandt. Dieses Licht wird von den Lichtleitern 10 gesammelt und an den Fotomultiplier 11 abgegeben. Dieser verstärkt die Signale, wandelt sie in digitale Bildsignale um und leitet sie an einen zentralen Computer 13 mit Bildspeicher weiter.

Beim Auslesen wird die Phosphorfolie 8 von einem Transportband 9 in einer Slow-Scan-Richtung A transportiert. Über den beweglichen Spiegel 6 wird die Phosphorfolie 8 in einer Fast-Scan-Richtung B punktweise abgetastet.

Nach dem Abtasten der Phosphorfolie 8 wird diese durch eine Löscheinrichtung 12 nachgelöscht. Anschließend wird die Röntgenkassette 1 wieder mit derselben Phosphorfolie 8 beladen und steht für die nächste Röntgenaufnahme zur Verfügung.

Vom zentralen Computer 13 ist das digitalisierte Bild in einem Digitalspeicher 15 speicherbar, an einem Diagnosebildschirm 14 auswertbar oder über eine digitale Schnittstelle 13a an ein Hardcopy-Gerät 16 ausgebbar, das das Bild als Ausdruck auf fotografischem Film 17 wiedergibt. Über die Schnittstelle 13a sind die Bilddaten auch an beliebige andere digitale Bildsysteme weiterleitbar.

Innerhalb der Lesestation 18 wird mittels PIN-Dioden 19 festgestellt, wann die Phosphorfolie 8 in die Lesestation 18 eintritt. Die PIN-Dioden 19 empfangen das Licht des Lasers 5 solange, bis das Laserlicht durch die opake Phosphorfolie 8 vor den PIN-Dioden 19 abgeschirmt wird. Der Zeitpunkt der Abschirmung signalisiert das Eintreffen der Phosphorfolie 8 in der Lesestation 18.

Wie eingangs bereits erwähnt, kann zur Überprüfung der Abtastgenauigkeit der Abtastvorrichtung 4 ein Testbild mit einem Blei-Phantommuster 1a erstellt werden. Dazu wird das Blei-Phantommuster 1a auf oder in die Röntgenkassette 1 gelegt und die stimulierbare Folie unter der Röhre 3 bestrahlt. Anschließend wird das Röntgenbild mit der Abtastvorrichtung 4 digitalisiert und im Computer 13 ausgewertet. Die Bildverarbeitung ist abhängig von den Identifikationsdaten (Aufnahmebereich, Auswerteparameter) der Kassette.

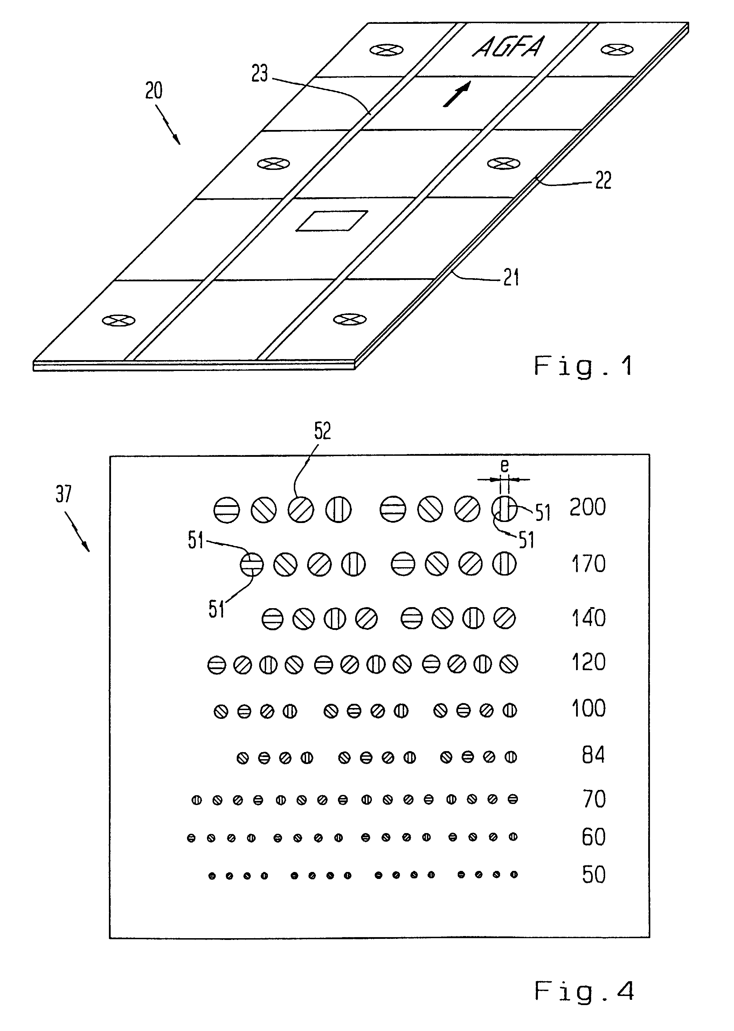

In Fig. 1 ist eine erfindungsgemäß hergestellte Phosphorfolie 20 dargestellt. Sie besteht aus einer konventionellen Phosphorfolie 21, die stimulierbare Elemente enthält. Auf den Grundträger 21 ist eine mit einem Testmuster 23 bedruckte Folie 22 aufgeklebt. Die Folie 22 ist in diesem Ausführungsbeispiel eine 35 µm dicke, selbstklebende Folie aus Agfa Copyproof-Material. Das aufgedruckte Testmuster 23 ist mit fotografischem Belichtungsverfahren erstellt. Das Testmuster 23 ist schwarz, die übrige Folie 22 transparent. Das Testmuster ist zwar für Röntgenstrahlen durchlässig, nicht jedoch für sichtbares Licht sowie Infrarotstrahlung.

Zum Durchführen eines Testdurchgangs wird ähnlich verfahren wie bei Blei-Phantombildern: Die Phosphorfolie 20 mit dem Testmuster 23 wird in eine Röntgenkassette 1 entsprechenden Formats eingelegt und der Röntgenstrahlung ausgesetzt. Dadurch wird die Phosphorfolie 20 gleichmäßig durch die Röntgenstrahlung stimuliert. Vorteilhaft gegenüber den Phantombildern ist jedoch, daß das Testbild in jedem Fall eine korrekte Zuordnung zu den Rändern der Phosphorfolie hat. Die Position der Phosphorfolie innerhalb der Kassette spielt deshalb für die Position des Testbilds auf der Phosphorfolie keine Rolle. Nach erfolgter Röntgenbestrahlung wird die Röntgenkassette in die Ausleseeinheit eingeführt und die Phosphorfolie 20 aus der Kassette entnommen. Beim anschließenden Stimulieren und Abtasten der Testfolie wird die Stimulationsstrahlung der Phosphorfolie lediglich dazu verwendet, das aufgedruckte Testmuster zu beleuchten. In den schwarzen Bereichen des Testmusters wird die Stimulationsstrahlung abgeschattet, der Fotomultiplier erhält in diesen Bereichen also kein Licht. In den transparenten Bereichen des Testmusters wird dagegen Stimulationslicht durchgelassen. Es kann vom Photomultiplier empfangen werden. Für den an den Fotomultiplier angeschlossenen Rechner stehen verschiedene Auswerte-Programme zur Verfügung, mit denen bei vorbestimmter Geräteeinstellung folgende Auswertungen durchgeführt werden können:
- geometrische Abtast-Parameter, wie Scan-Breite, Scan-Länge, Linearitätsabweichungen der Scan-Zeilen oder Scan-Spalten
- Auflösungsparameter, wie Laser-Spot-Größe sowie
- Artefakte des Slow-Scans bzw. Fast-Scans (jitter, wobble).

Die Auswertung mit entsprechender Software kann pixelgenau erfolgen, wobei ausschnittsweise bestimmte Bereiche des Testmusters an einem am Hauptrechner angeschlossenen Monitor betrachtet sowie mit dem Hauptrechner statistische Berechnungen durchgeführt werden können.

Ein anderes Auswerteprogramm gibt das Testbild über eine angeschlossene Hardcopy-Einrichtung auf fotografischem Film aus.

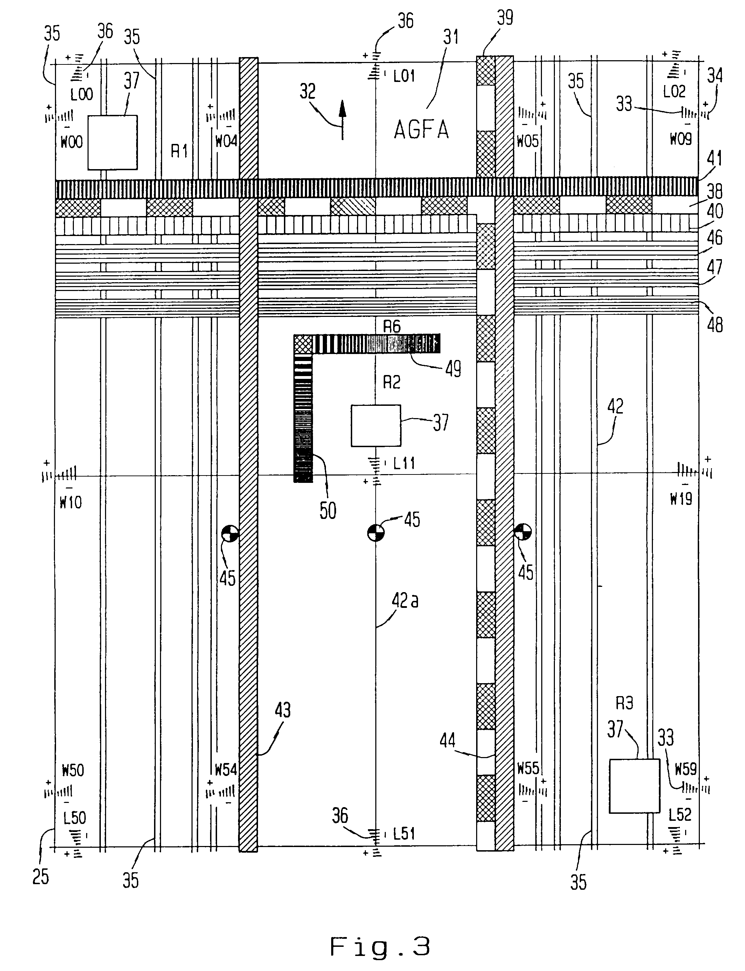

Anhand der Fig. 3 werden die einzelnen Bereiche des Testmusters und ihre Bedeutung für die Auswertung näher erläutert. Die Phosphorfolie mit Testmuster ist mit einem Beschriftungsfeld 31 versehen, auf dem ein Titel sowie eine Identifikationsnummer vermerkt ist. Ein Pfeil 32 gibt die Richtung an, in der die Phosphorfolie innerhalb der Ausleseeinheit transportiert wird (Slow-Scan-Richtung). Markierungen 33 geben verschiedene Breiten entsprechend verschiedenen Formaten an. Die Markierungen sind matrixförmig angeordnet und jeweils mit Wn,m bezeichnet, wobei n die Zeilennummer der Matrix angibt und m die Spaltennummer. Jede Breitenmarkierung 33 enthält Maßlinien 34, die Abweichungen von einer bestimmten Breite angeben. Durch jede Breitenmarkierung verläuft jeweils eine Justierlinie 35, die in Slow-Scan-Richtung 32 verläuft. Ihre Linienbreite beträgt jeweils 100 bis 120 µm. Die Maßlinien 34 haben jeweils Abstände von 0,5 mm. Dadurch kann die Scan-Breite der Abtastvorrichtung auf mindestens 0,5 mm genau angegeben werden. Eine positive bzw. negative Skala geht jeweils vom Mittelpunkt der Breitenmarkierung 33 aus. Dadurch kann sehr schnell festgestellt werden, ob die effektive Scan-Breite zu klein oder zu groß ist.

Längenmarkierungen 36 sind in derselben Weise wie die Breitenmarkierungen 33 aufgedruckt. Die Längenmarkierung "L01" gibt die erste Scan-Zeile an, d. h. die Führungskante der Phosphorfolie.

Mittels dreier im linken oberen bzw. rechten unteren sowie im Zentrum des Testbild-Musters angegebener Mire-Muster 37, z. B. gemäß DIN 19051, ist die Auflösung der Abtasteinrichtung sowie ihre Homogenität hinsichtlich des Laserfokus prüfbar. Außerdem sind damit Justage der optischen Elemente und Pixel-Ansteuerbarkeit prüfbar. Die Mire-Muster 37 sind besonders wirkungsvoll in Verbindung mit Gitterlinien 49, 50. Diese Gitterlinien 49, 50 sind in Bereiche unterteilt von 0,25; 0,5; 1; 2; 3; 4 und 5 Linienpaaren pro Millimeter. Der Vergleich von Mire-Meßergebnissen mit Gitterlinien-Meßergebnissen vereinfacht die Fehlersuche bei geometrischen Bildfehlern der Abtastvorrichtung.

Zum Testen der Wiedergabe geometrischer Formen dienen außerdem die beiden Balkenmuster 38 in Fast-Scan-Richtung bzw. 39 in der dazu senkrechten Slow-Scan-Richtung. Die schwarzen Balken (schraffiert dargestellt) sind jeweils 1 cm breit und erstrecken sich jeweils über die Zeilen- bzw. Spaltenrichtung. Ein Leiter-Muster 40, welches in Zeilenrichtung, d. h. Fast-Scan-Richtung angeordnet ist, läßt eine Linearitätsmessung der Abtastvorrichtung an den Rändern einer Scan-Zeile zu.

Die Sprossenbreite beträgt 200 µm, die Leiterfrequenz 2 Linien/cm. Mittels eines weiteren Frequenzmusters 41, welches eine Frequenz von 0,5 Linienpaaren/mm hat und sich in Zeilenrichtung erstreckt, läßt sich die räumliche Linearität in Zeilenrichtung messen.

Von besonderer Bedeutung sind Justierlinien 35, 42, die über das gesamte Testbild verlaufen. Mit diesen Justierlinien kann ein Slow-Scan-Schieflauf der Phosphorfolie innerhalb der in Fig. 2 gezeigten Auswerteeinrichtung 18 festgestellt werden. Die Justierlinien 35, 42 verlaufen parallel zur Kante der Test-Phosphorfolie 20. Die zentrale Justierlinie 42a kann außerdem zur Ausrichtung der Phosphorfolie in der Ausleseeinheit 18 dienen. Zwei in Slow-Scan-Richtung verlaufende, ca. 1 cm breite Grauflächen 43, 44 dienen zum einfachen Erkennen von Störungen der Slow-Scan-Geschwindigkeit. Unregelmäßigkeiten in der Scan-Geschwindigkeit äußern sich dabei in unterschiedlich wiedergegebenen Grauwerten innerhalb einer Graufläche 43, 44. Die Graufläche 43 ist im Rasterdruck mit 175 dpi erstellt, die zweite Graufläche 44 ebenfalls im Rasterdruck mit 250 dpi.

Die Position der Phosphorfolie innerhalb der Ausleseeinheit 18 ist außerdem mittels dreier Justierkreise 45 möglich. Die Justierkreise weisen jeweils vier Segmente auf, von denen jeweils gegenüberliegende Segmente weiß bzw. schwarz sind. Dadurch läßt sich das Zentrum der Justierkreise auch bei einem abgetasteten Bild sehr genau feststellen. In die Test-Phosphorfolie 20 sind jeweils im Zentrum der Justierkreise Löcher eingestanzt, so daß innerhalb der in Fig. 2 gezeigten Auslesestation 18 ein Laserstrahl durch die Stanz-Löcher auf die PIN-Dioden 19 treffen kann. Beim Abtasten der Folie in der Ausleseeinheit läßt sich dann anhand der PIN-Diodensignale eindeutig feststellen, ob die Phosphorfolie korrekt abgetastet wird. Bei Verwendung eines Schwingspiegels als Ablenkspiegel kann eine Justage des Ablenkspiegels erfolgen, indem eine Zeitdifferenzmessung der PIN-Diodensignale erfolgt. In diesem Falle müssen die PIN-Dioden jeweils drei Signale, jeweils bei jedem der Stanz-Löcher empfangen.

Zum Erkennen von Jitter- bzw. Wobble-Effekten in Zeilenrichtung dienen schließlich drei Gitterlinien 46 mit 3 Linienpaaren/mm, 47 mit 4 Linienpaaren/mm und 49 mit 5 Linienpaaren/mm. Jitter-Effekte in Zeilenrichtung äußern sich innerhalb des ausgelesenen Bildes dadurch, daß auf dem ausgelesenen Bild Moiré-Muster, d. h. z. B. wellenförmige Störungsmuster über den Gitterlinien 46 (3 Linien pro Millimeter), 47 (4 Linien pro Millimeter) und 48 (5 Linien pro Millimeter) zu sehen sind.

In Fig. 4 ist das Miré-Muster 37 des Testmusters 23 vergrößert gezeigt. Es besteht aus einer Vielzahl von Kreisen 52 oder Achtecken. In den Kreisen 52 sind jeweils unter verschiedenen Winkeln zur Zeilenrichtung A Linien 51 aufgebracht. Die Linien 51 haben Abstände e von 50 bis 200 µm. Nach dem Scannen des Testmusters 23 läßt sich durch Auswertung des Miré-Bildes die Auflösung der Abtasteinrichtung sowie die Homogenität des Laserstrahl-Fokus bestimmen.

Obwohl die Erfindung anhand eines Ausführungsbeispieles beschrieben wurde, ist es möglich, erfindungsgemäß das Testmuster um weitere Testbild-Elemente zu ergänzen, um auch andere Systemparameter zu testen. Beispielsweise ist es möglich, die Phosphorfolie um weitere, charakteristische geometrische Formen zu ergänzen, die aus fernsehtechnischen oder mikrografischen Anwendungen bekannt sind. Insbesondere aus konventionellen Phantom-Testbildern können ebenfalls Testmuster übernommen werden.

Besonders aussagekräftig bei der vorliegenden Erfindung ist der Vergleich von erfindungsgemäßen Testbildern mit konventionellen Phantom-Testbildern. Durch diesen Vergleich lassen sich aufnahmebedingte Störungen, z. B. schiefliegende Phosphorfolie in der Kassette eindeutig trennen von auslesebedingten Störungen, z. B. Schieflauf der Folie in der Auswerteeinheit.

Wenn das Testmuster auf einer transparenten Klebefolie aufgebracht ist, kann sie durch Zuschneiden entlang aufgedruckter Formatgrenzen sehr leicht an kleinere Formate der Phosphorfolie angepaßt werden.

## Patentansprüche

1. Verfahren zum Testen verschiedener Systemparameter einer digitalen Abtastvorrichtung (18) für stimulierbare Phosphorfolien (8, 20), dadurch gekennzeichnet, daß durch die Abtastvorrichtung (18) eine stimulierbare Phosphorfolie (20) abgetastet wird, auf der ein fest vorgegebenes, nicht löschbares Prüfmuster (23) aufgebracht ist.

2. Verfahren zum Testen verschiedener Systemparameter einer digitalen Abtastvorrichtung (18) nach Anspruch 1, dadurch gekennzeichnet, daß zusätzlich eine Phosphorfolie (8) abgetastet wird, auf der ein mit einem Blei-Phantommuster (20) unter Röntgenstrahlung erzeugtes Phantombild aufgebracht ist und daß die beiden Abtastergebnisse miteinander verglichen werden.

3. Verfahren nach Anspruch 2, dadurch gekennzeichnet, daß das Phantombild in einer ein Phantom enthaltenden Röntgenkassette (1) erstellt wird.

4. Stimulierbare Phosphorfolie (20) zum Testen verschiedener Systemparameter einer digitalen Abtastvorrichtung (18), dadurch gekennzeichnet, daß ein fest vorgegebenes, nicht löschbares Prüfmuster (23) aufgebracht ist.

5. Stimulierbare Phosphorfolie nach Anspruch 4, dadurch gekennzeichnet, daß das Prüfmuster 23 durchlässig für Röntgenstrahlen und undurchlässig für die Phosphorfolie (20) stimulierende Strahlung, insbesondere für sichtbares oder IR-Licht ist.

6. Stimulierbare Phosphorfolie nach Anspruch 4, dadurch gekennzeichnet, daß das Prüfmuster (23) undurchlässig für von der Phosphorfolie (8, 20) ausgesandtes, stimuliertes Licht ist.

7. Stimulierbare Phosphorfolie nach einem der Ansprüche 4 bis 6 dadurch gekennzeichnet, daß das Prüfmuster (23) aus Licht abschattendem Material auf einer transparenten Folie (21) erstellt ist, die auf die Phosphorfolie (20) aufgeklebt ist.

8. Stimulierbare Phosphorfolie nach einem der Ansprüche 4 bis 6, dadurch gekennzeichnet, daß das Prüfmuster (23) aus Licht abschattendem Material auf die Phosphorfolie (20) aufgedruckt ist.

9. Stimulierbare Phosphorfolie nach einem der Ansprüche 4 bis 8, dadurch gekennzeichnet, daß das Prüfmuster (23) folgende Bestandteile aufweist:
(1) einen Pfeil (32), der eine Slow-Scan-Richtung angibt
(2) mehrere Markierungen (33), die verschiedene Breiten markieren
(3) mehrere Markierungen (36), die verschiedene Längen markieren
(4) Linien (35) vorgegebener Breite, Länge und Richtung
(5) Verschiedene Balkenmuster (38, 39, 40, 46, 47, 48) mit Balken vorgegebener Länge und Breite, die sich in Slow-Scan-Richtung und/oder senkrecht dazu erstrecken und jeweils eine vorgegebene Ortsfrequenz besitzen
(6) mindestens eine Graufläche (43) und
(7) mehrere Justierkreise (45).

## Claims

1. Process for the testing of various systems parameters of a digital scanning device (18) for stimulatable phosphorus films (8, 20), characterised in that there is scanned by means of the scanning device (18) a stimulatable phosphorus film (20) to which a precisely predetermined, non-extinguishable test specimen (23) is applied.

2. Process for the testing of various systems parameters of a digital scanning device (18) according to claim 1, characterised in that in addition a phosphorus film (8) is scanned to which a phantom image produced with a phantom lead specimen (20) under X-ray radiation is applied and that the two scanning results are compared with one another.

3. Process according to claim 2, characterised in that the phantom image is created in an X-ray cassette (1) containing a phantom.

4. Stimulatable phosphorus film (20) for the testing of various systems parameters of a digital scanning device (18), characterised in that a precisely predetermined, non-extinguishable test specimen (23) is applied.

5. Stimulatable phosphorus film according to claim 4, characterised in that the test specimen (23) is permeable to X-rays and impermeable to radiation stimulating the phosphorus film (20), in particular to visible or IR light.

6. Stimulatable phosphorus film according to claim 4, characterised in that the test specimen (23) is impermeable to stimulated light emitted by the phosphorus film (8, 20).

7. Stimulatable phosphorus film according to one of claims 4 to 6, characterised in that the test specimen (23) is created from light-occluding material on a transparent film (21) which is bonded to the phosphorus film (20) .

8. Stimulatable phosphorus film according to one of claims 4 to 6, characterised in that the test specimen (23) of light-occluding material is printed onto the phosphorus film (20).

9. Stimulatable phosphorus film according to one of claims 4 to 8, characterised in that the test specimen (23) possesses the following components:
(1) an arrow (32) which indicates a slow-scan direction,
(2) several markings (33) which mark various widths,
(3) several markings (36) which mark various lengths,
(4) lines (35) of pre-determined width, length and direction,
(5) various bar specimens (38, 39, 40, 46, 47, 48) with bars of predetermined length and width, which extend in the slow-scan direction and/or perpendicular thereto and possess in each case a predetermined spatial frequency,
(6) at least one grey area (43) and
(7) several alignment circles (45).

## Revendications

1. Procédé de vérification de différents paramètres système d'un dispositif numérique d'exploration (18) pour des feuilles au phosphore stimulables (8, 20), caractérisé en ce qu'une feuille au phosphore stimulable (20), sur laquelle est appliqué un modèle de contrôle (23) non effaçable et prédéfini, est balayée par le dispositif d'exploration (18).

2. Procédé de vérification de différents paramètres système d'un dispositif numérique d'exploration (18) selon la revendication 1, caractérisé en ce qu'est, en outre, soumise au balayage une feuille au phosphore (8), sur laquelle est appliquée une image fantôme produite par un modèle fantôme au plomb (20) sous des rayons X, et en ce que les deux résultats du balayage sont comparés l'un à l'autre.

3. Procédé selon la revendication 2, caractérisé en ce que l'image fantôme est élaborée dans une cassette radiographique (1) contenant un fantôme.

4. Feuille au phosphore stimulable (20) pour la vérification de différents paramètres système d'un dispositif numérique d'exploration (18), caractérisée en ce qu'est appliqué un modèle de contrôle (23) non effaçable et prédéfini.

5. Feuille au phosphore stimulable selon la revendication 4, caractérisée en ce que le modèle de contrôle (23) est transparent aux rayons X et opaque au rayonnement stimulant la feuille au phosphore (20), notamment à la lumière visible ou à la lumière infrarouge.

6. Feuille au phosphore stimulable selon la revendication 4, caractérisée en ce que le modèle de contrôle (23) est opaque à la lumière stimulée, émise par la feuille au phosphore (8, 20).

7. Feuille au phosphore stimulable selon l'une des revendications 4 à 6, caractérisée en ce que le modèle de contrôle (23) est fabriqué à partir d'un matériau coupant la lumière, sur une feuille transparente (21), qui est collée sur la feuille au phosphore (20).

8. Feuille au phosphore stimulable selon l'une des revendications 4 à 6, caractérisée en ce que le modèle de contrôle (23), en un matériau coupant la lumière, est appliqué par impression sur la feuille au phosphore (20).

9. Feuille au phosphore stimulable selon l'une des revendications 4 à 8, caractérisée en ce que le modèle de contrôle (23) présente les éléments constitutifs suivants :
(1) une flèche (32), qui indique une direction de balayage lent,
(2) plusieurs repères (33), qui désignent des largeurs différentes,
(3) plusieurs repères (36), qui désignent des longueurs différentes,
(4) des lignes (35) ayant une largeur, une longueur et une direction prédéfinies,
(5) divers motifs à barres (38, 39, 40, 46, 47, 48) comportant des barres de longueur et de largeur prédéfinies, qui s'étendent dans la direction du balayage lent et/ou perpendiculairement à celle-ci et qui ont chacun une fréquence locale prédéfinie,
(6) au moins une zone grise (43), et
(7) plusieurs cercles de justification (45).
